# EUROPÄISCHE PATENTANMELDUNG

(11) **EP 0 934 799 A2**
(43) Veröffentlichungstag der Anmeldung: **11.08.1999**
(21) Anmeldenummer: 99101866.4
(22) Anmeldetag: 28.01.1999
(51) Int. Cl.: B23K 35/363, G01N 29/02, B23K 31/12

(54) **Ermittlung des Gehalts an Inhaltsstoffen von Flussmitteln in automatischen Lötmaschinen**

(30) Priorität: 05.02.1998 DE 19804445
(71) Anmelder: GRUNDIG Aktiengesellschaft, 90762 Fürth (DE)
(72) Erfinder: Ferger, Manfred c/o GRUNDIG AG, 90762 Fürth (DE); Weidel, Günther c/o GRUNDIG AG, 90762 Fürth (DE)

(57) **Zusammenfassung**

Die Erfindung betrifft eine Vorrichtung zur Ermittlung und Steuerung des Gehaltes von Festkörpern in einem Flußmittel einer automatischen Lötanlage für Leiterplatten. Eine Sensoreneinheit erfaßt den Festkörpergehalt des in einem Behälter vorhandenen Flußmittels und übermittel die gewonnene Daten über den Festkörpergehalt im Flußmittel an eine Steuereinheit. Diese vergleicht die erfaßten Daten über den Festkörpergehalt im Flußmittel mit den in der Steuereinheit vorhandenen Solldaten. Die Sensoreneinheit ist im oder am Behälter oder in einer Zuflußleitung angeordnet, so daß die Sensoreneinheit den Festkörpergehalt des Flußmittels an der Flußmitteloberfläche des Flußmittels im Behälter, innerhalb des Behälters oder in der Zuflußleitung erfaßt. Die Sensoreneinheit ist eine Ultraschallsensoreinheit.

## Beschreibung

Die Erfindung betrifft eine Vorrichtung zur Ermittlung des Gehaltes an Inhaltsstoffen von Flußmittel in automatischen Lötmaschinen, mit den Merkmalen des Oberbegriffs nach Anspruch 1.

In automatischen Lötmaschinen werden elektronische und elektromechanische Bauteile auf mit Leiterbahnen bedruckten Leiterplatten aufgelötet, wobei die zu lötenden Flächen zunächst mit einem Flußmittel benetzt werden. Derartige Flußmittel bestehen zum einen aus Wirkstoffen wie zum Beispiel organischen Salzen und Säuren und zum anderen aus einem Verdünner, welcher organische Lösungsmittel, zumeist Alkohol, enthält. Die üblichen eingesetzten Flußmittel bestehen üblicherweise aus Kolophonium und Aktivatoren, welche in Alkohol gelöst sind.

Nur bei konstanter Flußmittelzusammensetzung ist die Erzielung gleichmäßiger Lötergebnisse gewährleistet. Um dies zu Erreichen ist es erforderlich, den Gehalt der verschiedenen Inhaltsstoffe des verwendeten Flußmittels zu überwachen und gegebenenfalls durch Zugabe von Verdünner bzw. durch Austausch des Flußmittels zu korrigieren. Eine Veränderung des Gehalts an den verschiedenen Inhaltsstoffen tritt auf, da beim Lötenvorgang die leichtflüchtigen Lösungsmittel verdampfen und somit die Fest- bzw. Wirkstoffkonzentration des Flußmittels erhöht wird. Außerdem sind die verwendeten Lösungsmittel zumeist stark hygroskopisch. Daher nimmt der Wassergehalt im Laufe der Zeit zu.

Im Labor ist eine Bestimmung des Gehalts an den verschiedenen Inhaltsstoffen von Flußmittel zwar ohne größere Schwierigkeiten möglich, jedoch sehr zeitaufwendig. Eine Überprüfung auf eine gleichbleibende Zusammensetzung des Flußmittels einer im Betrieb befindlichen Lötmaschine ist auf diese Weise nicht zu gewährleisten. Um die gleichbleibende Zusammensetzung des Flußmittels zu regeln, ist daher eine schnelle Messung während des Betriebs der Lötmaschine erforderlich. Bei bekannten Verfahren zur Bestimmung des Fest- bzw. Wirkstoffgehalts von Flußmittel während des Betriebs einer automatischen Lötmaschine (DE 37 37 564 A1 und DE 35 37 368 A1) wird zu diesem Zweck eine photometrische Titration durchgeführt. Hierbei wird der automatischen Lötmaschine ein Teil des Flußmittels entnommen und die Lichtdurchlässigkeit der Probemenge in Abhängigkeit von der Zugabe einer Prozeßflüssigkeit gemessen. Diese Verfahren haben jedoch den Nachteil, daß das zur Messung benötigte Flußmittel durch die Zugabe der Prozeßflüssigkeit für die weitere Benutzung als Flußmittel unbrauchbar wird und als Abfallprodukt entsorgt werden muß. Außerdem ist die Meßeinrichtung zur Abmessung der zugegebenen Menge der Prozeßflüssigkeit aufwendig und störungsanfällig. Aus diesem Grunde ist es vielfach noch üblich, zur Sicherstellung der Lötergebnisse in regelmäßigen Zeitabständen das Flußmittel der automatischen Lötmaschine ohne Überprüfung der genannten Inhaltsstoffe vollständig auszutauschen und zu entsorgen.

Aus DE 41 38 628 A1 ist ein weiteres Verfahren zur Ermittlung des Gehaltes an einem Inhaltsstoff von Flußmittel automatischer Lötmaschinen bekannt, bei welchem die Extinktion bzw. die Transmission von elektromagnetischer Strahlung durch das Flußmittel gemessen und durch Vergleich des Ist-Meßwerts mit bekannten gespeicherten Werten der Gehalt an diesem Inhaltsstoff ermittelt wird. Die Extinktion bzw. Transmission wird in einem Frequenzbereich gemessen, in welchem eine starke Extinktion durch den zu bestimmenden Inhaltsstoff auftritt. Mit derselben Frequenz wird eine Vergleichsmessung an einem Bezugsmedium durchgeführt. Die Differenz der beiden Meßwerte wird zum Vergleich mit bekannten gespeicherten Werten herangezogen. Nachteilig bei diesem Verfahren ist, daß die Messung sehr aufwendig ist, insbesondere wird die Messung am Flußmittel aufwendig mit elektromagnetischer Strahlung durchgeführt und das Ergebnis dieser Messung mit einer weiteren Messung an einem Referenzflußmittel, verglichen.

Neuere Flußmittel weisen lediglich noch einen Festkörpergehalt von 1,8 bis 5% auf. Aus diesem Grunde sind die Dichteunterschiede zwischen dem Lösungsmittel und dem Flußmittel sehr gering. Die bekannten Meßverfahren können daher nicht mehr eingesetzt werden. Zusätzlich beeinträchtigt die hygroskopische Eigenschaft des Lösungsmittels die Meßergebnisse. Wasser in Form von Luftfeuchtigkeit wird von dem Lösungsmittel absorbiert und verfälscht das Meßergebnis des Festkörpergehaltes.

Aufgabe der Erfindung ist es, eine einfache und kostengünstige Vorrichtung zur Messung der Inhaltsstoffe von Flußmitteln in automatischen Lötmaschinen zu entwickeln unter Vermeidung der genannten Probleme.

Diese Aufgabe wird gemäß der Erfindung, ausgehend von den Merkmalen des Oberbegriffs des Anspruches 1 durch die kennzeichnenden Merkmale des Anspruches 1 gelöst.

Die Vorteile der Erfindung liegen insbesondere in dem Einsatz von Ultraschall zur Festkörperbestimmung im Lösungsmittel. Der Ultraschall ist auf das jeweilige Flußmittel abgestimmt. Hierdurch werden optimale Meßergebnisse erzielt, die Meßeinheit ist einfach im Aufbau und störungsunanfällig.

Vorteilhafte Ausgestaltungen der Erfindung sind in den abhängigen Ansprüchen gegeben.

Vorteilhaft gemäß Anspruch 2 ist, daß die Sensoreneinheit (2) aufgrund der Werkstoffauswahl das Meßergebnis und die Flußmittelzusammensetzung nicht beeinflußt.

Gemäß Anspruch 3 ist von Vorteil, daß der prozentuale Festkörpergehalt im Flußmittel erfaßt wird..

Vorteilhaft gemäß Anspruch 4 ist daß der Abstand zwischen den Meßeinheiten konstant ist, auch wenn die Meßeinheiten getauscht werden.

Vorteilhaft gemäß Anspruch 5 ist, die kombinierte Ultraschall Sende- und Empfangseinheit, welche kostengünstiger ist und eine einfachere elektrische Verbindung zur Steuereinheit ermöglicht, da nur eine elektrische Verbindung nötig ist.

Die Erfindung wird im folgenden an einem exemplarischen Ausführungsbeispiel anhand einer Zeichnung erläutert. Das Ausführungsbeispiel ist keine erschöpfende Aufzählung der erfindungsgemäßen Ausgestaltungsmöglichkeiten, sondern hat nur beispielhaften Charakter.

Es zeigt:

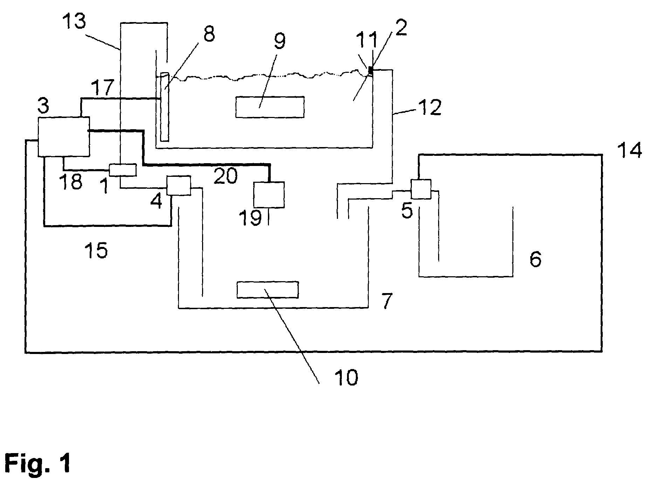

- Fig. 1: einen schematischen Aufbau der erfindungsgemäßen Vorrichtung
- Fig. 2: einen weiteren schematischen Aufbau der erfindungsgemäßen Vorrichtung

Die Vorrichtung setzt sich aus einer Sensoreneinheit 1, einem Behälter 2, einer Steuereinheit 3, einer Pumpe 4, einer Zugabedosiereinheit für Lösungsmittel 5, einem Behälter mit Lösungsmittel 6, einem Sammelbehälter 7, einer Füllstandserfassungseinrichtung 8, einem Fluxer 9, einem Mischer/Rührwerk 10, einem Überlauf 11, einer Überlaufleitung 12, einer Zuflußleitung 13, den Steuerleitungen 14, 15, 17, 18, 20 und einer Zugabedosiereinrichtung für Flußmittel 19 zusammen.

Das Flußmittel befindet sich im Behälter 2. Um zu gewährleisten daß stets eine gute Durchmischung des Flußmittels im Behälter 2 vorhanden ist, wird aus dem Behälter 7 ständig über die Pumpe 4 und die Zulaufleitung 13 frisches Flußmittel in den Behälter 2 eingebracht. Wird der Überlauf 11 überschritten, fließt das Flußmittel über die Überlaufleitung 12 zurück in den Behälter 7. Im Behälter 2 befindet sich der Fluxer 9. Der Fluxer 9 bewirkt, daß Leiterplatten, welche sich über dem Fluxer befinden, mit Flußmittel besprüht werden. Durch den Fluxer 9 wird das Flußmittel im Behälter 2 durchgemischt, so daß stetig eine gleichmäßige Konzentration über den Behälter verteilt ist.

Im Behälter 2 befindet sich eine Füllstandserfassungseinrichtung 8. Diese Füllstandserfassungseinrichtung 8 ist über die Steuerleitung 17 mit der Steuereinheit 3 verbunden. Über die Füllstandserfassungseinrichtung 8 wird überwacht, daß der Behälter 2 stets gut gefüllt ist. Sollte die Pumpe 4 ausfallen, wodurch sich das Niveau im Behälter senkt, wird über die Füllstandseinrichtung 8 erkannt und der Steuereinheit 3 mitgeteilt. Diese löst daraufhin eine Alarmierung aus.

In der Zuflußleitung 13 ist die Sensoreneinheit 1 angeordnet. Die Sensoreneinheit 1 besteht aus einer Ultraschallsendeeinheit und einer Ultraschallempfangseinheit. Beide Einheiten sind fix miteinander verbunden, wodurch zwischen der Ultraschallsendeeinheit und der Ultraschallempfangseinheit ein definierter Abstand besteht. Das Flußmittel aus Behälter 7 wird über die Zuflußleitung 13 und die Pumpe 4 aus dem Behälter 7 in den Behälter 2 gepumpt. Hierbei wird von der Sensoreneinheit 1 über deren Ultraschallsendeeinheit und Empfangseinheit die Dichte des Flußmittels bestimmt. Dies erfolgt in der Weise, daß der Ultraschall von der Ultraschallsendeeinheit ausgesendet wird und von der Ultraschallempfangseinheit empfangen wird. Aus dem Leistungsunterschied zwischen dem ausgesendeten Ultraschallsignal und dem empfangenen Ultraschallsignal errechnet die Steuereinheit 3 den Festkörpergehalt des Flußmittels. Der Ultraschall ist derart eingestellt, daß insbesondere die Festkörper im Flußmittel den Ultraschall absorbieren. Auf diese Weise kann anhand der Sende- und Empfangsleistung des Ultraschallsignals festgestellt werden, wie hoch der Festkörpergehalt im Flußmittel ist.
Der von der Steuereinheit 3 ermittelte Festkörpergehalt im Flußmittel wird mit gespeicherten Sollwerten verglichen. Ist der Festkörpergehalt im Flußmittel zu niedrig, so steuert die Steuereinheit die Zugabedosiereinheit 19 über die Steuerleitung 20 an und bringt in den Behälter 7 Aktivatoren ein. Hierdurch wird der Festkörpergehalt im Behälter 7 erhöht. Durch den Mischer/Rührwerk 10 wird die zugegebene Menge an Aktivatoren durchmischt und über die Pumpe 4 und die Steuerleitung 13 in den Behälter 2 eingebracht. Auf diese Weise wird der Festkörpergehalt des Flußmittels im Kreislauf zwischen Behälter 7 und Behälter 2 erhöht.

Stellt die Steuereinheit fest, daß der Festkörpergehalt zu hoch ist, steuert diese über die Steuerleitung 14 die Zugabedosiereinheit 5 an. Diese entnimmt aus dem Behälter 6 Lösungsmittel und bringt sie in Behälter 7 ein. Folglich wird der Festkörpergehalt im Behälter 7 erniedrigt und über den Kreislaufbehälter 7, Behälter 2 insgesamt herabgesetzt.

Die Steuereinheit 3 bestimmt den Festkörpergehalt im Kreislauf der Behälter 7 und 2 fortwährend. Sobald der Festkörpergehalt aus dem Sollbereich abweicht, wird durch Zugabe von Aktivatoren bzw. Lösungsmittel der vorher eingestellt Sollwert wieder eingependelt.

Durch die Sensoreneinheit 1 wird eine definierte Meßstrecke innerhalb des zu messenden Mediums des Flußmittels definiert. Durch die Absorption von Ultraschall über diese definierte Meßstrecke innerhalb des Flußmittels wird die Dichte und somit der Festkörpergehalt des Flußmittels von der Steuereinheit 3 bestimmt.

In einer vorteilhafen Ausgestaltung der Erfindung ist die Sensoreneinheit 1 direkt im bzw. am Behälter 2 angeordnet. Auf diese Weise bestimmt die Steuereinheit 3 den Festkörpergehalt direkt im Behälter 2 und somit unmittelbar beim Fluxer 9. Auf diese Weise wird vermieden, daß die Nachregelung des Festkörpergehaltes zu träge reagiert.

Vorteilhaft hat sich im weiteren erwiesen, daß Material der Sensoreneinheit 2 aus einem Werkstoff herzustellen, der mit dem eingesetzten Flußmittel und den Aktivatoren nicht reagiert. Auf diese Weise wird vermieden, daß die Meßeinheit selbst Einfluß auf die Dichte des zu messenden Mediums nimmt.

In einer weiteren vorteilhaften Ausgestaltungsform der Erfindung ist die Sensoreneinheit 1 in Form einer Sende- und Empfangseinheit mit einer Reflektoreinheit verbunden. Die Sende- und Empfangseinheit sendet eine Ultraschallwelle aus. Diese wird von der Reflektoreinheit reflektiert und von der Sendeempfangseinheit empfangen. Auf diese Weise entfällt eine weitere Steuerleitung zur Empfangseinheit, da beide in einem einzigen Gehäuse integriert sind. Es hat sich als besonders vorteilhaft erwiesen, die Reflektoreinheit in parabolischer Form auszuführen, da hierdurch die Ultraschallwellen in gebündelter Form an die Sende- und Empfangseinheit reflektiert werden.

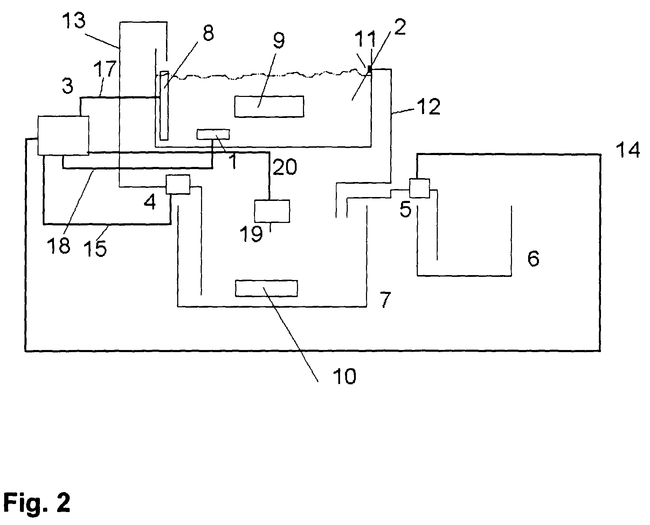

Im Falle der Anordnung der Sensoreneinheit 1 innerhalb des Behälters 2 gemäß dem Ausfürungsbeispiel nach Fig. 2 hat es sich als vorteilhaft erwiesen, die Messung zu deaktivieren, wenn der Fluxer 9 in Betrieb ist. Unmittelbar nachdem der Fluxer abgeschaltet ist, wird die Messung durchgeführt. Hierdurch ist gewährleistet, daß eine gute Durchmischung des Mediums vorhanden ist und zugleich die Arbeitsweise des Fluxers keinen Einfluß auf das Meßergebnis nimmt.

Vorteilhaft anhand dieser Anordnung ist der Einsatz von Alkohol als Lösungsmittel.In diesem Fall tritt aber der Umstand auf, daß der Alkohol im Behälter 2 und Behälter 7 verdampft. Daher erhöht sich der Festkörpergehalt im Flußmittel. Die Steuereinheit 3 erkennt dies mittels der Sensoreneinheit 1 und gibt über die Steuerleitung 14 den Befehl, an die Dosiereinrichtung 5 aus dem Behälter 6 Alkohol in den Behälter 7 einzubringen. Auf diese Weise wird der verdunstete Alkohol wieder in das Regelsystem eingebracht.

## Patentansprüche

1. Vorrichtung zur Ermittlung und Steuerung des Gehaltes von Festkörpern und/oder spezifischen Feststoffen in einem Flußmittel, welches insbesondere aus Kolophonium, Aktivatoren und Lösungsmittel besteht, einer automatischen Lötanlage für Leiterplatten, wobei eine Sensoreneinheit (1) den Festkörpergehalt des in einem Behälter (2) vorhandenen Flußmittels erfaßt und diese erfaßten Daten über den Festkörpergehalt im Flußmittel an eine Steuereinheit (3) übermittelt, und die Steuereinheit (3) die erfaßten Daten über den Festkörpergehalt im Flußmittel mit den in der Steuereinheit (3) vorhandenen Solldaten vergleicht
**dadurch gekennzeichnet,**
daß die Sensoreneinheit (1) im oder an dem Behälter (2) oder in einer Zuflußleitung (13) angeordnet ist, so daß die Sensoreneinheit (1) den Festkörpergehalt des Flußmittels an der Flußmitteloberfläche des Flußmittels im Behälter (2), innerhalb des Behälters (2) oder in der Zuflußleitung (13) erfaßt, daß die Sensoreneinheit (1) eine Ultraschallsensoreinheit ist, und daß die Steuereinheit (3) über Zugabedosiereinheiten (5) und (19) die Zusammensetzung des Lösungsmittel in Abhängigkeit der von der Sensoreinheit (1) erfaßten Daten steuert, um den Festkörpergehalt in dem Flußmittel auf einen vorgegebenen Wert zu halten und daß die Frequenz des Ultraschalls der Sensoreneinheit (1) über die Steuereinheit (3) an das eingesetzte Flußmittel angepaßt ist.

2. Vorrichtung zur Ermittlung und Steuerung des Gehaltes von Festkörpern in einem Flußmittel nach Anspruch 1,
**dadurch gekennzeichnet,**
daß die Oberfläche der Sensoreneinheit (1) aus einem Material besteht, welches mit dem Flußmittel im Behälter (2) nicht chemisch reagiert.

3. Vorrichtung zur Ermittlung und Steuerung des Gehaltes von Festkörpern in einem Flußmittel nach einem oder mehreren der vorherigen Ansprüche,
**dadurch gekennzeichnet,**
daß die Sensoreneinheit (1) mittels Ultraschall über die physikalische Absorption von Ultraschall durch vorhandene Festkörper im Flußmittel deren prozentualen Anteil im Flußmittel erfaßt.

4. Vorrichtung zur Ermittlung und Steuerung des Gehaltes von Festkörpern in einem Flußmittel nach einem oder mehreren der vorherigen Ansprüche,
**dadurch gekennzeichnet,**
daß die Sensoreneinheit (1) aus einer Ultraschallsendeeinheit und einer Ultraschallempfangseinheit besteht und die Ultraschallsendeeinheit mit der Ultraschallempfangseinheit fest verbunden ist, sodaß der Abstand zwischen beiden Einheiten stets konstant ist.

5. Vorrichtung zur Ermittlung und Steuerung des Gehaltes von Festkörpern in einem Flußmittel nach einem oder mehreren der Ansprüche 1 bis 3,
**dadurch gekennzeichnet,**
daß die Sensoreneinheit (1) aus einer kombinierten Ultraschallsende- und Empfangseinheit und einer Reflektoreinheit besteht und die kombinierte Ultraschallsende- und Empfangseinheit mit der Reflektoreinheit fest verbunden ist, so daß der Abstand zwischen beiden Einheiten stets konstant ist, wodurch eine definierte Meßstrecke entsteht.

6. Vorrichtung zur Ermittlung und Steuerung des Gehaltes von Festkörpern in einem Flußmittel nach Anspruch 5,
**dadurch gekennzeichnet,**
daß die Reflektoreinheit aus einem parabolisch geformten Werkstoff, oder einem plangefortem Werkstoff besteht und daß maximale Reflexion der von der Ultraschallsende- und Empfangseinheit ausgesendeten Ultraschallwellen an der Reflektoreinheit entsteht.

7. Vorrichtung zur Ermittlung und Steuerung des Gehaltes von Festkörpern in einem Flußmittel nach einem oder mehreren der vorherigen Ansprüche,
**dadurch gekennzeichnet,**
daß die Zugabedosiereinheiten (4) Lösungsmittel und die Zugabedosiereinheiten (5) Aktivatoren enthält.

8. Vorrichtung zur Ermittlung und Steuerung des Gehaltes von Festkörpern in einem Flußmittel nach einem oder mehreren der vorherigen Ansprüche,
**dadurch gekennzeichnet,**
daß die Steuereinheit (3) die Zugabemenge an Aktivatoren und/oder Lösungsmittel in den Behälter (2) über die Zugabedosiereinheiten (5) und (19) steuert und daß die Steuereinheit (3) die Zugabemenge an Aktivatoren und/oder Lösungsmittel anhand der erfaßten Daten, der definierten Solldaten, des Fassungsvermögens des Behälters (2) und der Füllmenge des Behälters (2) ermittelt.

9. Vorrichtung zur Ermittlung und Steuerung des Gehaltes von Festkörpern in einem Flußmittel nach einem oder mehreren der vorherigen Ansprüche,
**dadurch gekennzeichnet,**
daß die Füllmenge des Behälters (2) eine Füllstandserfassungseinrichtung (8) erfaßt und die Füllmenge an die Steuereinheit (3) übermittelt.

10. Vorrichtung zur Ermittlung und Steuerung des Gehaltes von Festkörpern in einem Flußmittel nach einem oder mehreren der vorherigen Ansprüche,
**dadurch gekennzeichnet,**
daß die Steuereinheit die Füllmenge des Behälters (2) konstant hält.

11. Vorrichtung zur Ermittlung und Steuerung des Gehaltes von Festkörpern in einem Flußmittel nach einem oder mehreren der vorherigen Ansprüche,
**dadurch gekennzeichnet,**
daß die Steuereinheit (3) die Daten der Füllstandserfassungseinrichtung (8) nur nach der Beendigung eines Fluxvorganges oder vor Initiierung eines Fluxvorganges auswertet.

12. Vorrichtung zur Ermittlung und Steuerung des Gehaltes von Festkörpern in einem Flußmittel nach einem oder mehreren der vorherigen Ansprüche,
**dadurch gekennzeichnet,**
daß das Lösungsmittel reiner Alkohol ist.

13. Verfahren zum Betrieb der Vorrichtung zur Ermittlung und Steuerung des Gehaltes von Festkörpern in einem Flußmittel nach einem oder mehrerer der vorherigen Ansprüche,
**dadurch gekennzeichnet,**
daß die Ultraschallmessung über eine konstante Meßstrecke und eine konstante Meßzeit durchgeführt wird.
